Europäisches Patentamt

**European Patent Office**

Office européen des brevets

(19)

(11) Veröffentlichungsnummer: **0 284 608**
**B1**

(12) **EUROPÄISCHE PATENTSCHRIFT**

(45) Veröffentlichungstag der Patentschrift: **20.06.90**

(51) Int. Cl.⁵: **F 16 H 59/04**

(21) Anmeldenummer: **87900084.2**

(22) Anmeldetag: **21.11.86**

(86) Internationale Anmeldenummer:
**PCT/EP86/00673**

(87) Internationale Veröffentlichungsnummer:
**WO 87/03255 04.06.87 Gazette 87/12**

---

(54) MECHANISCHE FERNSCHALTANLAGE.

---

(30) Priorität: **28.11.85 PCt/ep85/00652**

(43) Veröffentlichungstag der Anmeldung:
**05.10.88 Patentblatt 88/40**

(45) Bekanntmachung des Hinweises auf die
Patenterteilung:
**20.06.90 Patentblatt 90/25**

(84) Benannte Vertragsstaaten:
**DE GB**

(56) Entgegenhaltungen:
**FR-A-2 327 882**
**US-A-3 978 739**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **HELLER, Hubert
Hechelfurt 3
D-7996 Meckenbeuren (DE)**
Erfinder: **FÜHRER, Gerd
Porscheweg 5
D-7990 Friedrichshafen (DE)**

(74) Vertreter: **Raue, Reimund
Zahnradfabrik Friedrichshafen AG Löwentaler
Strasse 100 Postfach 2520
D-7990 Friedrichshafen 1 (DE)**

EP 0 284 608 B1

Courier Press, Leamington Spa, England.

**Beschreibung**

Diese Erfindung betrifft eine mechanische Fernschaltanlage zur Gangumschaltung von Kraftfahrzeuggetrieben nach dem Oberbegriff von Anspruch 1 wie sie z.B. aus der US—A—3978739 bekannt ist.

Solche Anlagen sind besonders für Stadt- und Reisebusse bekannt, wo mit dem Schaltgestänge eine relativ große Distanz überbrückt werden muß und wo durch Hindernisse—Achsen, Kofferräume, Benzintanks—bedingt das Schaltgestänge sowohl in vertikaler wie auch in horizontaler Richtung ausgelenkt werden muß. Die immer weiter fortschreitende Unterflurnutzung bei solchen Bussen, vorrangig bei Reisebussen, bedingt eine immer größere Zahl von Richtungsänderungen im Schaltgestänge und damit immer mehr Lagerstellen, wobei diese vorrangig als Gleitlager für die axiale Verschiebung und die Drehbewegung, z.B. mit Kunststoffbüchsen, ausgeführt sind. Mit der Erhöhung der Richtungsänderungen und damit der Anzahl der Lagerstellen erhöht sich auch die Reibung und verringert sich die Steifigkeit. Solche Fernschaltanlagen erfordern deshalb hohe Schaltkräfte und bedingen schwergängige Schaltanlagen mit einer schlechten Gangzentrierung.

Es ist deshalb Aufgabe der Erfindung, eine Fernschaltanlage nach dem Oberbegriff von Anspruch 1 in Richtung auf Leichtgängigkeit und Steifigkeit und damit den Schaltkomfort und Wirkungsgrad sowie die Sicherheit der Schaltung mit einem geringstmöglichen Bauaufwand zu verbessern.

Diese Aufgabe wird mit den kennzeichnenden Merkmalen vom Anspruch 1 erfüllt.

Die Verwendung von Schwingenlagern zur Abstützung vom Schaltgestänge verringert erheblich die Reibung, besonders dann, wenn das Schaltgestänge wie in modernen Reisebussen mehrere Gelenke hat und relativ stark von einer geraden Verbindung vom Fernschaltbock zur Drehwelle am Getriebe abweicht. So haben vergleichende Wirkungsgradmessungen von 55% bei herkömmlichen Fernschaltanlagen mit Gleitlager zu Verbesserungen auf 98% bei Schwinglagerschaltgestängen geführt.

Mit der Verwendung eines allgemein bekannten und in großen Serien hergestellten Spurstangenkopfes in der Lagerschwinge wird dabei eine sehr einfache und preisgünstige Lösung erzielt, zumal diese Spurstange original, also ohne jede Anpassung, verwendet werden kann.

Eine Wirkungsgradoptimierung wird erzielt, wenn für den begrenzten Weg der Lagerschwinge von einer Mittelstellung—Neutralstellung der Schaltung—in je eine Endlage—geschaltete Gänge, z.B. 1, 3, 5, 7 usw. bzw. 2, 4, 6, 8 usw.—zwischen der Schaltschwinge und dem feststehenden Lagerbock Kugellager eingebaut sind.

Als Lagerböcke in Verbindung mit einer als Bügel ausgebildeten Lagerschwinge lassen sich auch Spurstangenköpfe einsetzen, weil die Schwenkbewegung relativ klein ist.

Wird der konische Anschlußbolzen des Spurstangenkopfes in einer entsprechenden Bohrung zentrisch im Anschlußflansch eines Gelenkteiles vom Kreuzgelenk befestigt—z.B. in bekannter Weise mit einer gesicherten Mutter auf einem Gewindezapfen—so kann der Spurstangenkopf leicht über das offene Gelenkteil eingefädelt werden. Die Schaltstangen können dabei in bekannter Weise mit an beiden Seiten angeordneten Anschlußflanschen—ohne irgendeinen Durchbruch für die Lagerschwinge—ausgeführt werden.

Dann, wenn besonders enge Kreuzgelenke zur Verwendung gelangen sollen und der Spurstangenkopf keinen Platz innerhalb des Kreuzgelenkes hat, ist es auch möglich, am Anschlußflansch einer Schaltstange den konischen Anschlußbolzen zentrisch anzuordnen. Für die Lagerschwinge muß bei dieser Lösung jedoch ein Durchbruch in der Schaltstange vorgesehen werden.

Wird der vorrangig kardanisch ausgebildete Fernschaltbock noch mit einer Verstärkungseinrichtung für die Wählbewegung versehen, so kann die Wählsteifigkeit und damit die Sicherheit der Fernschaltung noch weiter verbessert werden.

Besonders gut geeignet ist die Fernschaltanlage für Busse mit einem Fernschaltbock im Bereich des Fahrerhauses und dem Getriebe im Heck des Fahrzeuges infolge der weiten Entfernung und der relativ vielen Lagerungen und Abweichungen des Schaltgestänges von der Geraden. Aber auch bei Getrieben, die an einen Mittelmotor angeflanscht sind oder bei Getrieben, die am Ende des Fahrerhauses angeordnet sind und das Schaltgestänge mehrere Lager aufweist, kann eine Fernschaltanlage mit Schwingenlagern vorteilhaft sein.

Wird das Kreuzgelenk einmal mit einer Schaltstange z.B. verschweißt, so ist in einfacher Weise im Schaltgestänge pro Gelenk nur eine Flanschverbindung notwendig.

Die Anpassung des Schaltgestänges an den Fahrzeugrahmen und die Einstellarbeiten zwischen Fernschaltbock und der Drehwelle am Getriebe können erheblich vereinfacht werden, wenn die Flanschverbindungen als Klemmverbindungen ausgeführt werden, die erste nach der Befestigung der Schwinglager am Fahrzeugrahmen das Schaltgestänge sowohl in axialer wie auch in Umfangsrichtung fixieren.

Eine besonders einfache Klemmverbindung wird erreicht über eine konische Bohrung in einem Gelenkteil des Kreuzgelenkes, die im Bereich des angeformten Flansches angebracht ist. Ein geschlitzter konischer Klemmring, der teilweise in dieser Bohrung gelagert ist, wirk dabei von einem über die Schaltstange geschobenen zweiten Flansch beim Anziehen der Befestigungsschrauben axial verschoben und bewirkt die Klemmung zwischen Kreuzgelenk und Schaltstange.

Weitere Einzelheiten der Erfindung werden anhand von Ausführungsbeispielen und Zeichnungen erläutert.

Es zeigen:

Fig. 1 ein Schwingenlager an einem Kreuzgelenk befestigt

Fig. 2 ein Schwingenlager nach Fig. 1 im Schnitt II—II

Fig. 3 ein Schwingenlager nach Fig. 1, jedoch in einer weiteren Ausführung der Befestigung

Fig. 4 ein Fernschaltbock in Ansicht

Fig. 5 ein Fernschaltbock in Seitensicht

Fig. 6 eine Fernschaltanlage in Seitensicht

Fig. 7 eine Fernschaltanlage in Draufsicht.

Fig. 8 ein Schwingenlager nach Fig. 1 in einer weiteren Ausführung

Fig. 9 ein Schwingenlager nach Fig. 8 im Schnitt

Fig. 10 eine Flanschverbindung im Längsschnitt

Fig. 11 ein Querschnitt nach Fig. 10 im Bereich des zweiten Flansches und der Schaltstange.

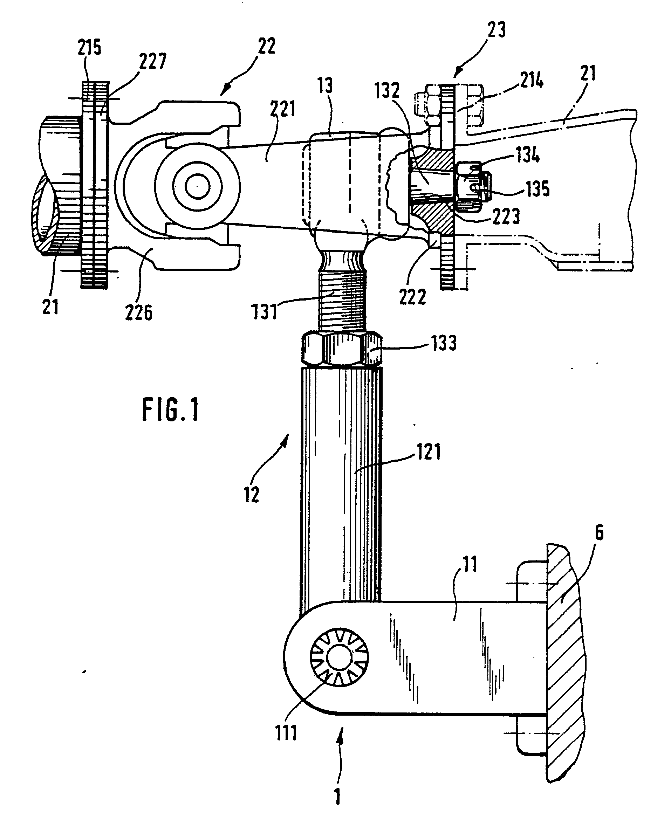

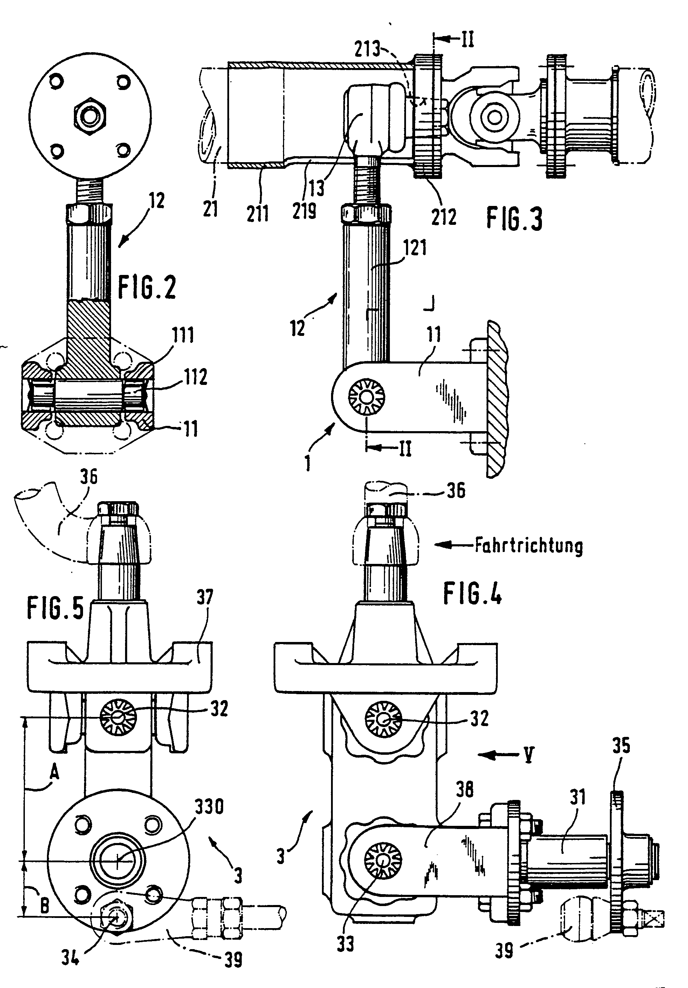

Nach Fig. 1 besteht des Schwingenlager 1 aus der Lagerschwinge 12, die über Bolzen 112 und Kugellager 111 mit einem am Fahrzeugrahmen 6 befestigten Lagerbock 11 verbunden ist. Die Lagerschwinge 12 hat einen Schaft 121 mit einer Bohrung und einem Innengewinde, in das das Gewindeteil 131 eines Spurstangenkopfes 13 eingeschraubt und über eine Kontermutter 133 gehalten ist. Der konische Anschluß 132 des Spurstangenkopfes 13 ist in einer konischen Bohrung 223 des Anschlußflansches 222 vom Kreuzgelenk 22 gehalten—über Gewindezapfen 135 und Mutter 134—. Um den Spurstangenkopf 13 zentrisch zum Anschlußflansch 222 einfädeln und anbringen zu können, muß das Gelenkteil 221 des Kreuzgelenkes 22 entsprechend groß ausgebildet sein, wobei das 2. Gelenkteil 226 in der allgemein üblichen kurzen Bauform ausgebildet sein kann. An den beiden Anschlußflanschen 222 und 227 des Kreuzgelenkes 22 sind die entsprechenden Anschlußflansche 214 und 215 über Verbindungsschrauben 23 befestigt. Dabei kann das Rohr 216 der Schaltstange 21 konisch 217 wie auch zylindrisch 218 verjüngt werden, um den Gesamtdurchmesser der Anschlußflansche gering zu halten. Der Schnitt II—II nach Fig. 2 zeigt insbesondere die Anordnung der Kugel- oder Gleitlager 111 inzwischen Lagerschwinge 12 und Lagerbock 11.

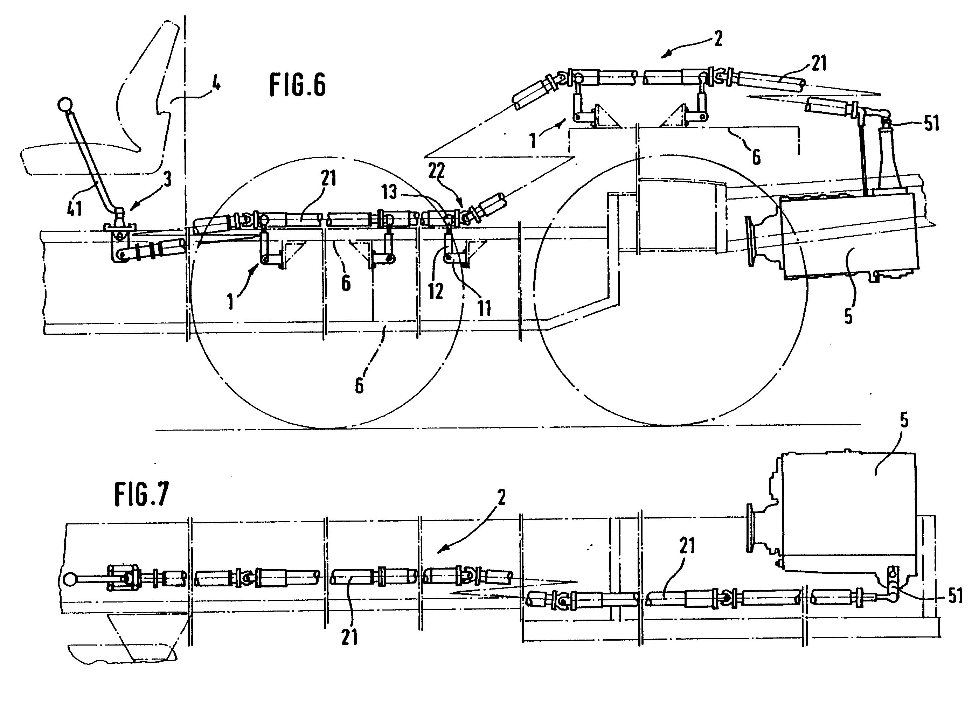

Das Schwingenlager nach Fig. 3 ist im Prinzip wie das nach Fig. 1 aufgebaut, nur die Befestigung des Spurstangenkopfes 13 erfolgt nicht am Anschlußflansch des Kreuzgelenkes, sondern am Anschlußflansch 212 einer Schaltstange 21, wobei zwischen diesem Anschlußflansch und der Schaltstange noch ein Rohrabschnitt 211 mit einem Durchbruch 219 für die Anordnung des Spurstangenkopfes 13 erforderlich ist. Mit dem Fernschaltbock nach den Figuren 4 und 5 wird in bekannter Weise die Wähl- und Schaltbewegung vom Fahrer über den Schalthebel 36 die am Fahrzeug befestigte Konsole 37 und über eine Gabel 38 auf das in Fig. 6 und 7 dargestellte Schaltgestänge 2 in bekannter Weise—DE—C—21 59 195—übertragen. Erfindungswesentlich ist nur die Übersetzung für die Wählbewegung zwischen dem Dreh- und Schwenkpunkt 32 am kardanischen Gelenk der Konsole 37, dem Mittelpunkt des Gelenkes für das Schalten 330 einerseits mit A bezeichnet und dem Gelenkmittelpunkt für das Schalten 330 sowie dem Abstützpunkt 34 für die Abstützstange 39 andererseits mit B bezeichnet. Der Ansatz 31 mit dem Anschlußflansch 35, der an der Gabel 38 nach Fig. 4 befestigt ist, trägt die Abstützstange 39 und ist deshalb zur Bildung der Übersetzung notwendig.

Aus Fig. 6 in Ansicht und Fig. 7 in Draufsicht ist die gesamte Fernschaltanlage zwischen dem Fernschaltbock 3 mit dem Schalthebel 41 im Fahrerhaus 4 und dem Getriebe 5 mit der Drehwelle 51 am Heck des Fahrzeuges erkennbar. Mit 6 ist der Fahrzeugrahmen bezeichnet, an dem die Schwingenlager 1 wie auch der Fernschaltbock 3 und das Getriebe 5 befestigt sind. Das Schaltgestänge 2 besteht aus den Schaltstangen 21, wobei die Abstützung am Fahrzeugrahmen 6 über die Schwingenlager 1 nach den Ausführungen Fig. 1 bis 3 z.B. erfolgen können.

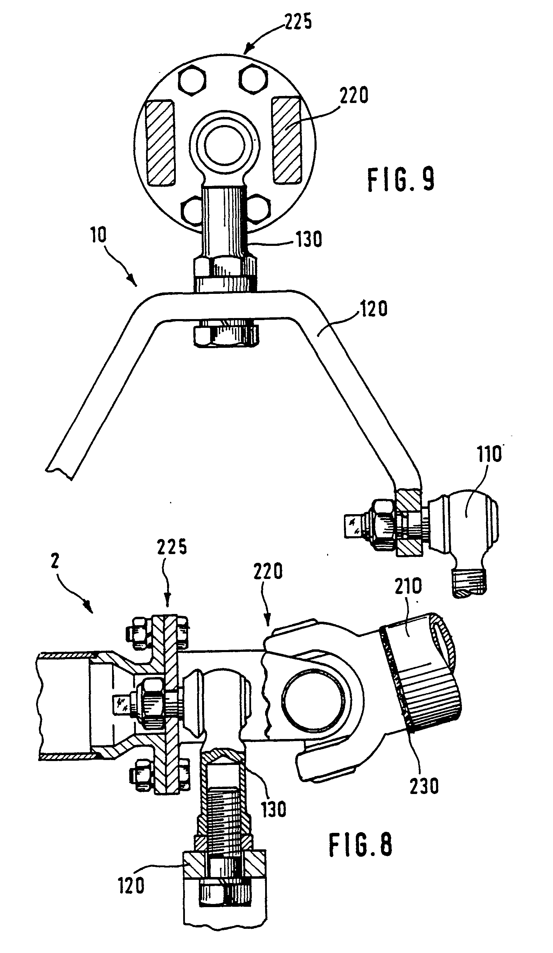

Die Fig. 8 und 9 zeigen eine weitere Ausführung des Schwingenlagers 10, wobei die Lagerschwinge 120 bügelartig gestaltet ist. Sie trägt einen Spurstangenkopf 130, der, wie bereits in Fig. 1 beschrieben, entweder über einen konischen Anschluß oder über eine zylindrische Bohrung—Fig. 8—in einem Teil des Kreuzgelenkes 220 mit diesem zentrisch verbunden ist.

Die Lagerschwinge 120 ist über zwei weitere Spurstangenköpfe 110 gelenkig am Fahrzeugrahmen befestigt, wobei die Spurstangenköpfe 110 eine begrenzte Schwenkbewegung der Lagerschwinge 120 und damit eine begrenzte Bewegung des Schaltgestänges 2 in axialer Richtung zulassen.

Eine der Schaltstangen 210 ist mit dem Kreuzgelenk 220 fest, z.B. mit einer Schweißnaht 230, verbunden. Damit hat jede Gelenkstelle—Kreuzgelenk 220—des Schaltgestänges 2 nur eine Flanschverbindung 225.

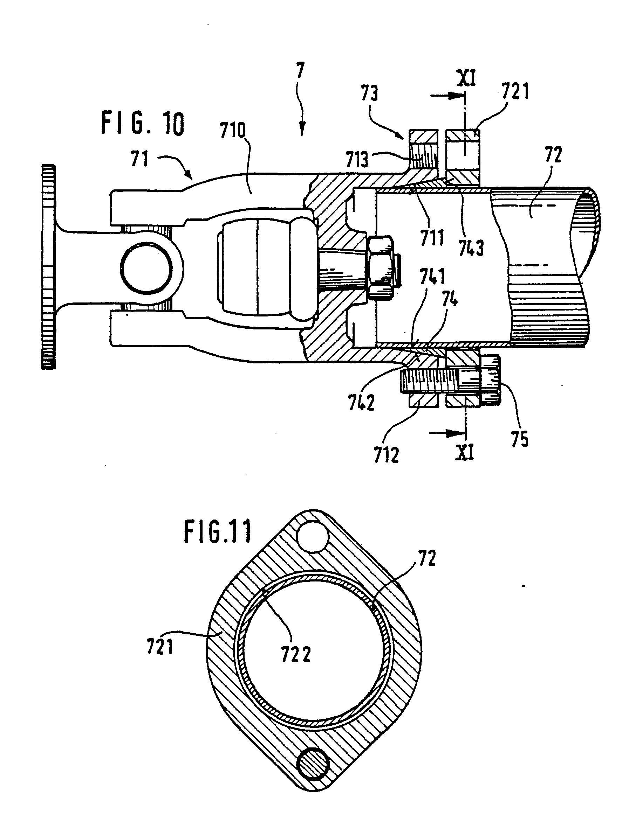

In einer weiteren Ausgestaltung nach den Fig. 10 und 11 ist im Bereich der Schaltgestängelagerung 7 die Verbindung des Kreuzgelenkes 71 mit der Schaltstange 72 noch als Ausgleichs- und Klemmeinrichtung 73 ausgebildet, um die axiale Anpassung des Schaltgestänges 2 an den Fahrzeugrahmen 6 und die Zentrierung der Schaltstangen 72 mit den Kreuzgelenken 71 zu vereinfachen. Dazu hat das Gelenkteil 710 im Bereich des angeformten Flansches 712 eine konische Bohrung 711 zur Aufnahme eines geschlitzten konischen Klemmringes 74, und die Befestigungsaugen des Flansches 712 haben Gewindebohrungen 713 zur Aufnahme von Befestigungsschrauben 75. Der zweite Flansch 721 ist nicht mehr mit der Schaltstange 72 fest verbunden, sondern wird mit seiner großen Bohrung 722 bei radialem Spiel über die grob abgelängte Schaltstange gesteckt. Ein geschlitzter konischer Klemmring 74 hat eine zylindrische Bohrung 741 und wird gleichfalls über das abgelängte Ende der Schaltstange gesteckt, so daß der radiale außenliegende Konus 741 beim Anfädeln des Kreuzgelenkes 71 auf die Schaltstange 72 teilweise in der konischen Bohrung 711 des Gelenkteiles 710 zu liegen kommt. Werden nach der Befestigung der Schaltgestängelagerung 7 an den Fahrzeugrahmen 6 die Befestigungsschrauben 75 angezogen, so drückt der zweite Flansche 721 auf die Stirnseite 743 des Klemmringes 74, und das Schaltgestänge wird in der durch die Ausgleichs- und Klemmeinrichtung 73 eingestellten Lage fixiert. Wird der Konus 742 in einem Winkel von etwa 8 bis 9° ausgeführt, können mit dieser Klemmung alle Schaltkräfte in axialer wie auch im Umfangsrichtung übertragen werden.

Die Fernschaltanlage wirkt wie folgt: Wird z.B. der Schalthebel nach Fig. 4 in Fahrtrichtung (nach links) bewegt, werden die in der Schaltkulisse in Fahrtrichtung liegenden Gänge vorrangig 1, 3, 5, 7 usw. geschaltet. Dabei wird über den Dreh- und Schwenkpunkt 32 die Bewegung umgelenkt, und das Gelenk für das Schalten bewegt sich in Gegenfahrtrichtung, also nach rechts. Damit wird das am Anschlußflansch 35 befestigte Schaltgestänge ebenfalls nach rechts bewegt, wobei alle Schwingenlager 1 aus der gezeichneten Mittelstellung—Fig. 1—um den Bolzen 112 in eine Endlage ca. 17° nach rechts geschwenkt werden. Die Kugellagerung zwischen Lagerbock 11 und Lagerschwinge 12 und die Beweglichkeit des konischen Anschlusses 132 am Spurstangenkopf 13 ermöglicht in Verbindung mit dem Kreuzgelenken 22 eine leichtgängige Verschiebung, die z.B. eine Verdrehung der Drehwelle 51 am Getriebe 5 sicherstellt, wobei die Schaltung der Gänge über die Schaltstangen und Schaltschwingen in bekannter Weise erfolgt.

Zum Wählen der Gassen wird der Schalthebel nach Fig. 5 aus der Neutrallage quer zur Fahrtrichtung, z.B. nach links, bewegt, so bewegt sich der Punkt 33 infolge der Drehung um den Dreh- und Schwenkpunkt 32 nach rechts. Da der Abstützpunkt 34 infolge der Abstützung durch die Abstützstange 39 fest stehenbleibt, ergibt sich eine Drehbewegung auf das Schaltgestänge 2. Diese Drehbewegung des Schaltgestänges 2 führt zu einer Verschiebebewegung der Drehwelle 51 im Getriebe 5 und damit zum Wählen der Gassen und wird durch die Spurstangenköpfe 13 der Schwingenlager 1 nicht wesentlich behindert.

Bezugszeichen
1 Schwingenlager
10 Schwingenlager
11 Lagerbock
110 Spurstangenkopf
111 Kugel- oder Gleitlager
112 Bolzen
12 Lagerschwinge
120 Lagerschwinge
121 Schaft
13 Spurstangenkopf
130 Spurstangenkopf
131 Gewindeteil
132 konischer Anschluß
133 Kontermutter
134 Mutter
135 Gewindezapfen
2 Schaltgestänge
21 Schaltstange
210 Schaltstange
211 Rohrabschnitt
212 Anschlußflansch
213 konische Bohrung
214 Anschlußflansch
215 Anschlußflansch
216 Rohr
217 konisch verjüngt
218 zylindrisch verjüngt
22 Kreuzgelenk
220 Kreuzgelenk
221 Gelenkteil
222 Anschlußflansch
223 konische Bohrung
225 Flanschverbindung
226 zweites Gelenkteil
227 zweiter Anschlußflansch
23 Verbindungsschrauben
230 Schweißnaht
3 Fernschaltbock
31 Ansatz
32 Dreh- und Schwerpunkt
33 Gelenk für Schalten
34 Abstützpunkt
35 Anschlußflansch
36 Schalthebel
37 Konsole
38 Gabel
39 Abstützstange
4 Fahrerhaus
41 Schalthebel
5 Getriebe
51 Drehwelle
6 Fahrzeugrahmen
7 Schaltgestängelagerung
71 Kreuzgelenk
710 Gelenkteil
711 konische Bohrung
712 Flansch
713 Gewindebohrung
72 Schaltstange
721 zweiter Flansch
722 große Bohrung
73 Ausgleichs- und Klemmeinrichtung
74 konischer Klemmring
741 zylindrische Bohrung
742 Konus
743 Stirnseite
75 Befestigungsschrauben

**Patentansprüche**

1. Mechanische Fernschaltanlage zur Gangumschaltung von Kraftfahrzeuggetrieben mit einem am Fahrzeug befestigten, mit einem Schalthebel (41) versehenen Fernschaltbock (3), mit einem Schaltgestänge (2), bestehend aus Schaltstangen (21) und Gelenken, vorzugsweise Kreuzgelenken (22), das die Schaltbewegungen auf eine Schaltanlage (Drehwelle 51) eines Schaltgetriebes (5) überträgt, und mit einem Lager oder Lagerungen (1) zur Abstützung des Schaltgestänges (2) am Fahrzeug, dadurch gekennzeichnet, daß das Schaltgestänge (2) mit mindestens einem Schwingenlager (10) ausgeführt ist, mit einer in Fahrzeuglängsrichtung beweglichen Lagerschwinge (12, 120), die am Fahrzeug gelagert (Lagerbock 11, Spurstangenkopf 110) gehalten und mit ihrem Kopf (Spurstangenkopf 13, 130) drehbar mit dem Schaltgestänge (2) verbunden ist und damit eine begrenzte Dreh- und Längsbewegung des Schaltgestänges (2) ermöglicht.

2. Mechanische Fernschaltanlage nach Anspruch 1, dadurch gekennzeichnet, daß die Lagerschwinge (12) an einem am Fahrzeugraumen (6) befestigten Lagerbock (11) angeordnet ist, einen Spurstangenkopf (13) trägt, der mit dem Gewindeteil (131) verstellbar mit dem Schaft (121) der Lagerschwinge (12) verbunden ist und ein konischer Aschlußflansch (132) an einer Schaltstange (21) oder einem Gelenkteil (221) des z.B. Kreuzgelenkes (22) zentrisch befestigt ist.

3. Mechanische Fernschaltanlage nach Anspruch 1, dadurch gekennzeichnet, daß die Lagerschwinge (120) einen Spurstangenkopf (130) trägt, der an einem Teil eines Kreuzgelenkes (220) zentrisch befestigt ist und die Drehbewegung des Schaltgestänges (2) ermöglicht und daß die als Bügel ausgebildete Lagerschwinge (120) über zwei Spurstangenköpfe (110) am Fahrzeugrahmen (6) befestigt ist.

4. Mechanische Fernschaltanlage nach Anspruch 2, dadurch gekennzeichnet, daß der Schaft (121) der Lagerschwinge (12) mit dem Lagerbock (11) über Kugel- oder Gleitlager (111) verbunden ist, in einem Gelenkteil (221) des Kreuzgelenkes (22) der Spurstangenkopf (13) angeordnet ist und der Anschlußflansch (222) dieses Gelenkteiles (22) eine zentrisch angeordnete konische Bohrung (223) zur Aufnahme des Spurstangenkopfes (13) hat.

5. Mechanische Fernschaltanlage nach Anspruch 2, dadurch gekennzeichnet, daß der Schaft (121) der Lagerschwinge (12) mit dem Lagerbock (11) über Kugel- oder Gleitlager (111) verbunden ist und der Spurstangenkopf (13) zentrisch in einem Rohrabschnitt (211) einer Schaltstange (21) angeordnet ist und der Anschlußflansch (212) eine konische Bohrung (213) zur Aufnahme des Spurstangenkopfes (13) trägt.

6. Mechanische Fernschaltanlage nach Anspruch 1, dadurch gekennzeichnet, daß der Fernschaltbock (3) noch eine Übersetzungseinrichtung (31, 32, 33, 34, 35, 39) für die Wählbewegung—Drehen des Schaltgestänges—aufweist.

7. Mechanische Fernschaltanlage nach Anspruch 5, dadurch gekennzeichnet, daß die Übersetzungseinrichtung zwischen dem Dreh- und Schwenkpunkt (32) des Fernschaltbockes (3) dem quer zur Fahrtrichtung angeordneten Gelenk für die Schaltbewegung (33) und dem Abstützpunkt (34) des Anschlußflansches (35) für das Schaltgestänge (2) bei der Wählbewegung—Drehbewegung—angeordnet ist.

8. Mechanische Fernschaltanlage nach einem der vorgenannten Ansprüche, dadurch gekennzeichnet, daß bei einer mechanischen Fernschaltanlage für einen z.B. Fernreisebus zwischen dem Fernschaltbock (3) mit Wählübersetzung (31) im Bereich des Fahrerhauses (4) und der Drehwelle (51) am Getriebe (5) ein aus mehreren Schaltstangen (21) und Kreuzgelenken (22) bestehendes Schaltgestänge 2 angeordnet und über Schwingenlager (1) abgestützt ist, das die Wähl- und Schaltbewegung vom Schalthebel (41) auf die Drehwelle (51) überträgt.

9. Mechanische Fernschaltanlage nach einem der vorgenannten Ansprüche, dadurch gekennzeichnet, daß das Kreuzgelenk (220) mit einer Schaltstange (210) unlösbar (Schweißnaht 230) verbunden und im Schaltgestänge (2) an jeder Gelenkstelle (Kreuzgelenk 225) nur eine Flanschverbindung (250) angeordnet ist.

10. Mechanische Fernschaltanlage nach einem der vorgenannten Ansprüche, dadurch gekennzeichnet, daß die Flanschverbindung zwischen Kreuzgelenk (71) und Schaltstange (72) zur besseren Anpassung des Schaltgestänges (2) an den Fahrzeugrahmen (6) als Ausgleichs- und Klemmeinrichtung (73) ausgebildet ist.

11. Mechanische Fernschaltanlage nach Anspruch 10, dadurch gekennzeichnet, daß

das Gelenkteil (71) im Bereich des angeformten Flansches (712) eine konische Bohrung (711) aufweist und im Flansch zur Aufnahme von Befestigungsschrauben (75) Gewindebohrungen (713) angeordnet sind;

im Endbereich der grob abgelängten Schaltstange (72) ein zweiter Flansch (721) mit radialem Spiel und zum Ende der Schaltstange zu ein geschlitzter konischer Klemmring (74) angeordnet ist und

daß nach dem Montieren der Schaltgestängelagerung (7) an den Fahrzeugrahmen (6) und dem Verbinden der beiden Flansche (712, 721) mit den Befestigungsschrauben (75) über die konische Bohrung (711) im Gelenkteil (710), dem in dieser Bohrung teilweise gelagerten konischen Klemmring (74) und die Schaltstange (72) eine vom Konuswinkel (742) und der axial wirkenden Kraft von den Befestigungsschrauben (75) abhängige Klemmverbindung erzeugt wird.

**Revendications**

1. Commande à distance mécanique de changement de vitesse pour boîtes de vitesses de véhicules, comportant un boîtier de commande à distance (3) ancré sur le véhicule et pourvu d'un levier de commande (41), une tringlerie (2) formée de tringles (21) et d'articulations, de préférence des joints de cardan (22) qui transmet au mécanisme de commande (arbre rotatif 51) de la boîte de vitesses (5) les mouvements du levier, ainsi qu'un ou plusieurs supports (1) pour la fixation de la tringlerie (2) sur le véhicule, caractérisée par le fait que la tringlerie (2) comprend au moins un ensemble support (10) avec une barre de réaction mobile dans le sens de la marche (12, 120), fixée à son extrémité inférieure contre le châssis du véhicule (support d'ancrage 11, rotule d'articulation 110) et reliée à son extrémité supérieure par une rotule d'articulation (13, 130) à la tringlerie de commande (2), de manière à lui laisser une certaine liberté de mouvement en rotation et dans le sens longitudinal.

2. Commande à distance mécanique selon la revendication 1, caractérisée par le fait que la barre de réaction (12) est articulée sur un support d'ancrage (11) solidaire du châssis du véhicule (6) et porte à son extrémité supérieure une rotule (13) reliée de façon réglable par une partie filetée (131) au corps (121) de la barre le réaction (12), et que l'une des tringles (21) ou l'une des fourchettes du joint de cardan p. ex. comporte à son extrémité une bride de raccordement conique (132) fixée de façon concentrique.

3. Commande à distance mécanique selon la revendication 1, caractérisée par le fait que la barre de réaction (120) porte une rotule (130) fixée de façon concentrique sur l'une des parties du joint de cardan (220) de manière à permettre le pivotement de la tringlerie de commande (2) et que la barre de réaction (120) conçue en forme d'étrier, est assujettie au châssis (6) du véhicule par l'intermédiaire de deux rotules (110).

4. Commande à distance mécanique selon la revendication 2, caractérisée par le fait que le corps cylindrique (121) de la barre de réaction (12) est relié au support d'ancrage (11) par l'intermédiaire d'un palier lisse ou d'un roulement à billes (111), que la rotule (13) est disposée dans l'une des fourchettes (221) du joint de cardan (22) et enfin que la bride de raccordement (222) de cette même fourchette (22) présente un alésage conique concentrique (223) pour le logement de la rotule (13).

5. Commande à distance mécanique selon la revendication 2, caractérisée par le fait que le corps cylindrique (121) de la barre de réaction (12) est relié au support d'ancrage (11) par l'intermédiaire d'un palier lisse ou d'un roulement à billes (111), que la rotule (13) est disposée de façon concentrique dans la partie tubulaire (211) d'une tringle de commande (21) et que la bride de raccordement (212) présente un alésage conique concentrique (223) pour le logement de la rotule (13).

6. Commande à distance mécanique selon la revendication 1, caractérisée par le fait que le boîtier de commande à distance (3) comprend en plus un dispositif de transmission (31, 32, 33, 34, 35, 39) pour le mouvement de sélection—pivotement de la tringlerie—.

7. Commande à distance mécanique selon la revendication 5, caractérisée par le fait que le dispositif de transmission est disposé, pour le mouvement de sélection— pivotement—, entre le pivot (32) du boîtier d'articulation (3), l'articulation orientée perpendiculairement au sens de la marche (33) agissant pour les opérations d'enclenchement et le point d'appui (34) de la bride de raccordement (35) de la tringlerie (2).

8. Commande à distance mécanique selon l'une des revendications précédentes, caractérisée par le fait que, en cas d'utilisation sur p. ex. les autocars long courrier, une tringlerie (2), composée d'un ou de plusieurs tringles de commande (21) et de joints de cardan (22) et supportée par un ou plusieurs ensembles supports (1) relie le boîtier d'articulation (3) et le dispositif de transmission (31), placés au niveau de la cabine conducteur (4), à l'arbre rotatif (51) de la boîte (5) afin de transmettre à ce dernier les mouvements de sélection et d'enchlenchement du levier de commande (41).

9. Commande à distance mécanique selon l'une des revendications précédentes, caractérisée par le fait que le joint de cardan (220) est assujetti de façon inamovible à une tringle de commande (210) (cordon de soudure 230) et que chaque point d'articulation (joint de cardan 225) de la tringlerie (2) ne comporte qu'un seul bridage (250).

10. Commande à distance mécanique selon l'une des revendications précédentes, caractérisée par le faitque, dans le but de faciliter l'adaptation de la tringlerie (2) au châssis (6) du véhicule, le bridage entre le joint de cardan (71) et la tringle de commande (72) est réalisé sous la forme d'un dispositif de compensation et de serrage (73).

11. Commande à distance mécanique selon la revendication 10, caractérisée par le fait que

la fourchette (710) près de la bride coulée dans la masse (712) présente un alésage conique (711), et la bride (712) des perçages taraudés pour le passage des vis de fixation (75);

la tringle de commande (72), sectionnée de façon grossière, comporte près de son extrémité une seconde bride (721) mobile dans le sens radial et, dirigée vers son extrémité, un bague de serrage conique fendue (74) et

par le fait que l'on obtient, après ancrage du support de la tringlerie de commande (7) dans le châssis du véhicule (6) et assemblage des deux brides (712, 721) avec les vis de fixation (75) audessus de l'alésage conique (711) de la fourchette (710), la bague de serrage conique (74) partiellement logée dans cet alésage et la tringle de liaison (72), un accouplement de serrage dont la rigidité est fonction de l'angle de cône (742) et de l'intensité de la force axiale exercée par les vis de fixation (75).

**Claims**

1. A mechanical remote-control switching system for gear changing of motor vehicle gearboxes, comprising a remote control block (3) secured to the vehicle and provided with a gearstick (41), a shift linkage (2) comprising gearshift bars (21) and joints, preferably universal joints (22), which transmits the gearshift movements to a gearshift device (rotary selector 51) of a change-speed gear (5), and a bearing or bearings (1) for supporting the shift linkage (2) on the vehicle, characterised in that the shift linkage (2) is provided with at least one rocker bearing (10), comprising a bearing rocker arm (12, 120), which is movable in the longitudinal direction of the vehicle, is mounted on the vehicle (bearing block 11, track-rod end 110) and is rotatably connected at its end (track-rod end 13, 130) with the shift linkage (2), thereby allowing for the limited rotational and longitudinal movement of the shift linkage (2).

2. A mechanical remote-control switching system according to Claim 1, characterised in that the bearing rocker arm (12) is arranged on a bearing block (11) secured to the vehicle chassis (6), supports a track-rod end (13), whose threaded portion (131) is adjustably connected with the shaft (121) of the bearing rocker arm (12), and a conical connecting flange (132) is centrally secured to a gearshift bar (21) or a joint section (221) of the joint (22), which is for example a universal joint.

3. A mechanical remote-control switching system according to Claim 1, characterised in that the bearing rocker arm (120) supports a track-rod end (130), which is centrally secured to one part of a universal joint (220) and allows for the rotational movement of the shift linkage (2), and in that the bearing rocker arm (120) designed in the shape of a bow is secured to the vehicle chassis via two track-rod ends (110).

4. A mechanical remote-control switching system according to Claim 2, characterised in that the shaft (121) of the bearing rocker arm (12) is connected with the bearing block (11) via ball or slide bearings (111), the track-rod end (13) is arranged in a joint section (221) of the universal joint (22) and the connecting flange (222) of the said joint section (22) comprises a centrally arranged conical bore (223) for receiving the track-rod end (13).

5. A mechanical remote-control switching system according to Claim 2, characterised in that the shaft (121) of the bearing rocker arm (12) is connected with the bearing block (11) via ball or slide bearings (111) and the track-rod end (13) is arranged centrally in a tube section (211) of a gearshift bar (21) and the connecting flange (212) comprises a conical bore (213) for receiving the track-rod end (13).

6. A mechanical remote-control switching system according to Claim 1, characterised in that the remote control block (3) also comprises a transmission device (31, 32, 33, 34, 35, 39) for the selecting movement—the rotation of the shift linkage.

7. A mechanical remote-control switching system according to Claim 5, characterised in that, during the selecting movement (rotational movement), the transmission device is arranged between the rotation and pivot point (32) of the remote control block (3), the joint (33) arranged transverse to the direction of travel for the gearshift movement and the bearing point (34) of the connecting flange (35) for the shift linkage (2).

8. A mechanical remote-control switching system according to one of the preceding claims, characterised in that in the case of a mechanical remote control switching system for a coach, for example, a shift linkage 2 comprising a plurality of gearshift bars (21) and universal joints (22) and supported via rocker bearings (1) is arranged between the remote control block (3) with the selector transmission (31) in the region of the driver compartment (4) and the rotary selector (51) on the gearbox (5), which shift linkage (2) transmits the selecting and gearshift movement from the gearstick (41) to the rotary selector (51).

9. A mechanical remote-control switching system according to one of the preceding claims, characterised in that the universal joint (220) is undetachably connected (welding seam 230) with a gearshift bar (210) and only one flange connection (250) is arranged at each joint site (universal joint 225) in the shift linkage (2).

10. A mechanical remote-control switching system according to one of the preceding claims, characterised in that the flange connection between the universal joint (71) and the gearshift bar (72) is designed as a compensating and clamping device (73) in order to improve the adaptation of the shift linkage (2) to the vehicle chassis (6).

11. A mechanical remote-control switching system according to Claim 10, characterised in that

in the region of the formed-on flange (712), the joint section (710) comprises a conical bore (711) and threaded bores (713) are disposed in the flange for receiving securing screws (75);

in the end region of the gearshift bar (72) which is cut roughly to length, a second flange (721) is arranged with radial clearance and a slotted conical clamping ring (74) is arranged towards the end of the gearshift bar, and

after the mounting of the shift linkage bearing (7) on the vehicle chassis (6) and the connection of the two flanges (712, 721) by means of the securing screws (75), a clamping connection which is dependent upon the cone angle (742) and the axially acting force of the securing screws (75) is produced via the conical bore (711) in the joint section (710), the conical clamping ring (74) partially mounted in the said bore and the gearshift bar (72).

FIG.1

FIG.2

FIG.3

FIG.5

FIG.4

Fahrtrichtung

FIG.6

FIG.7

EP 0 284 608 B1

FIG.9

FIG.8

FIG. 10

FIG.11